# EUROPÄISCHE PATENTSCHRIFT

(11) **EP 3 414 552 B1**
(45) Veröffentlichungstag und Bekanntmachung des Hinweises auf die Patenterteilung: **18.11.2020**
(21) Anmeldenummer: 17705082.0
(22) Anmeldetag: 09.02.2017
(51) Int. Cl.: G01N 21/3504, G01J 3/42, G02B 17/00, G01N 21/03

(54) **LANGWEGZELLE**
LONG PATH CELL
CELLULE À LONG PARCOURS

(30) Priorität: 11.02.2016 DE 102016102430; 11.02.2016 DE 102016102431
(43) Veröffentlichungstag der Anmeldung: 19.12.2018
(73) Patentinhaber: Rubin, Tom, 12163 Berlin (DE)
(72) Erfinder: Rubin, Tom, 12163 Berlin (DE)
(74) Vertreter: Schulz Junghans Patentanwälte PartGmbB
(86) Internationale Anmeldenummer: PCT/EP2017/052892
(87) Internationale Veröffentlichungsnummer: WO 2017/137502

(56) Entgegenhaltungen:
- ANDREA POGÁNY ET AL: "Development and Metrological Characterization of a Tunable Diode Laser Absorption Spectroscopy (TDLAS) Spectrometer for Simultaneous Absolute Measurement of Carbon Dioxide and Water Vapor", APPLIED SPECTROSCOPY., Bd. 69, Nr. 2, 2015, Seiten 257-268, XP055364022, US ISSN: 0003-7028, DOI: 10.1366/14-07575
- BÉLA TUZSON ET AL: "Compact multipass optical cell for laser spectroscopy", OPTICS LETTERS, OPTICAL SOCIETY OF AMERICA, Bd. 38, Nr. 3, 2013, Seiten 257-259, XP001579847, ISSN: 0146-9592, DOI: HTTP://DX.DOI.ORG/10.1364/OL.38.000257
- WOLFGANG GURLIT ET AL: "Lightweight diode laser spectrometer CHILD (Compact High-altitude In-situ Laser Diode) for balloonborne measurements of water vapor and methane", APPLIED OPTICS, Bd. 44, Nr. 1, 2005, Seite 91, XP055363997, WASHINGTON, DC; US ISSN: 0003-6935, DOI: 10.1364/AO.44.000091

## Beschreibung

Die Erfindung betrifft eine Langwegzelle. Eine Langwegzelle wird beispielsweise in der Spektroskopie verwendet, um einen Lichtstrahl auf einem möglichst langen Weg durch ein Probenvolumen zu schicken, sodass die Wechselwirkung zwischen dem Lichtstrahl und dem Material im Probenraum besonders intensiv ist.

Aus der US 9 250 175 B1 ist eine gattungsgemäße Langwegzelle bekannt, bei der einer der Spiegel aus einem ersten und einem zweiten Spiegelsegment besteht, wodurch die Anzahl an Reflektionen erhöht werden kann.

In der US 2011/ 0 164 251 A1 ist eine gattungsgemäße Langwegzelle beschrieben, bei der mittels eines Umlenkspiegels ein zweites Reflexionsmuster erzeugt wird.

Eine Langwegzelle ist aus der US 6 486 474 B1 bekannt und wird beispielsweise in der Spektroskopie verwendet, um einen Lichtstrahl auf einem möglichst langen Weg durch ein Probenvolumen zu schicken, sodass die Wechselwirkung zwischen dem Lichtstrahl und dem Material im Probenraum besonders intensiv ist. Es ist wünschenswert, wenn die Langwegzelle besonders einfach in den Strahlengang beispielsweise eines Lasers eingesetzt werden kann.

Die aus der US 2011/0164251 A1 bekannte Langwegzelle, bei der die Lichtquelle innerhalb des Probenvolumens angeordnet ist, kann nur schlecht in bestehende Systeme eingebaut werden.

Andrea Pogány et al. "Development and Metrological Characterization of a Tunable Diode Laser Absorption Spectroscopy (TDLAS) Spectrometer for Simultaneous Absolute Measurement of Carbon Dioxide and Water Vapor", APPLIED SPECTROSCOPY., Bd. 69, Nr. 2, 2015, Seiten 257-268, XP055364022 offenbart eine Herriot-Zelle mit zwei gegenüberliegenden Spiegeln, die so ausgerichtet sind, dass ein Lichtstrahl zwischen den beiden Spiegeln hin- und her reflektiert wird, wobei der Lichtstrahl mit Hilfe eines abnehmbaren Spiegels, entweder durch eine erste Zelle oder durch die Herriott Zelle gesendet wird, um die gleichzeitige Messung zweier Analyten zu ermöglichen. Diese Messanordnung ist jedoch vergleichsweise umständlich zu handhaben.

Der Erfindung liegt die Aufgabe zugrunde, eine verbesserte Langwegzelle vorzuschlagen. Die Erfindung löst das Problem durch eine Langwegzelle, insbesondere Herriott-Zelle, mit (a) einem ersten Spiegel und (b) einem zweiten Spiegel, dadurch gekennzeichnet, dass (c) der erste Spiegel ein erstes Erstspiegel-Segment und zumindest ein zweites Erstspiegel-Segment, das das erste Erstspiegel-Segment radial umgibt, aufweist, wobei sich die Erstspiegel-Segmente in ihren Krümmungen oder Brennweiten unterscheiden, (d) der zweite Spiegel ein erstes Zweitspiegel-Segment und zumindest ein zweites Zweitspiegel-Segment, das das erste Zweitspiegel-Segment radial umgibt, aufweist, wobei sich die Zweitspiegel-Segmente in ihren Krümmungen oder Brennweiten unterscheiden, (e) das erste Erstspiegel-Segment und das erste Zweitspiegel-Segment so einander zugeordnet sind, dass ein Lichtstrahl zwischen beiden hin-und zurückreflektiert wird und dass (f) das zweite Erstspiegel-Segment und das zweite Zweitspiegel-Segment so einander zugeordnet sind, dass ein Lichtstrahl zwischen beiden hin-und zurückreflektiert wird.

Eine derartige Langewegzelle hat den Vorteil, dass sie bei vorgegebenem Bauraum eine besonders lange Wegstrecke für den Lichtstrahl bereitstellt. Der Hintergrund ist, dass die Segmente so gebaut werden können, dass der Abstand in Umfangsrichtung von zwei benachbarten Auftreffpunkten im Wesentlichen nicht vom radialen Abstand des Auftreffpunkts (das heißt einer Radialkoordinate) abhängt. So können die Segmente so ausgebildet werden, dass die Auftreffpunkte eng benachbart liegen.

Die Abstände der Auftreffpunkte in Umfangsrichtung hängen nämlich bei gegebenem Spiegelabstand von der Krümmung des jeweiligen Spiegels am jeweiligen Auftreffpunkt des Lichtstrahls ab. Das führt dazu, dass bei Spiegeln mit konstanter Krümmung der Abstand in Umfangsrichtung von benachbarten Auftreffpunkten umso größer wird, je größer der radiale Abstand der Auftreffpunkte ist. Um die zur Verfügung stehende Spiegelfläche optimal auszunutzen, sollten die Auftreffpunkte möglichst dicht beieinander liegen. Das wird durch die sich unterscheidenden Krümmungen bei sphärisch gekrümmten Segmenten erreicht.

Ist zumindest eines der Segmente parabolisch gekrümmt, was eine bevorzugte Ausführungsform darstellt, unterscheiden sich die Segmente entweder dadurch, dass sie parabolisch oder sphärisch gekrümmt sind, oder - wenn zwei Segmente parabolisch gekrümmt sind - in ihren Brennweiten. Besonders günstig ist es, wenn alle Segmente parabolisch gekrümmt sind.

Der radiale Abstand ist der Abstand zu einer optischen Längsachse der Langwegzelle. Wird der Lichtstrahl was eine bevorzugte Ausführungsform darstellt zumindest drei Mal zwischen dem ersten Spiegel und dem zweiten Spiegel hin- und zurückreflektiert, so liegen die Auftreffpunkte des Lichtstrahls auf einem Segment vorzugsweise entlang eines Kreises, dessen Mittelpunkt auf der Längsachse liegt.

Im Rahmen der vorliegenden Beschreibung wird unter einem Spiegel eine Vorrichtung verstanden, die zumindest bezüglich einer Wellenlänge einen Reflexionsgrad von zumindest 0,95, insbesondere 0,98 aufweist.

Unter dem Merkmal, dass sich die Segmente in ihren Krümmungen bzw. Brennweiten unterscheiden, wird insbesondere verstanden, dass die Funktion, die die Krümmungen in den Segmenten in Abhängigkeit von der Längsachse beschreibt, an den Grenzen räumlich benachbarter Segmente unstetig ist. Alternativ sind die Segmente gebildet durch ring- oder teilringförmige und/oder sphärische Abschnitte, in denen sich die Krümmungen um zumindest 1 Promille unterscheiden.

Unter dem Auftreffpunkt wird der Punkt der höchsten Intensität des Lichtstrahls verstanden. Der Lichtstrahl ist vorzugsweise ein Laserstrahl.

Bei sphärisch gekrümmten Spiegel-Segmenten ist vorzugsweise die Krümmung im radial weiter außen liegenden Segment größer als im radial innen benachbart liegenden Segment. Günstig ist es, wenn die Segmente in ihren Oberflächen nicht bündig ineinander übergehen. Vorzugsweise gilt für zumindest ein Segment, insbesondere für die Mehrheit der Segmente, dass das radial weiter innen liegende Segment am Übergang zwischen beiden Segmenten axial dichter an einem Mittelpunkt der Langwegzelle liegt. So ergibt sich eine kompakte Bauweise.

Bei parabolisch gekrümmten Spiegel-Segmenten unterscheiden sich die Brennweiten vorzugsweise um zumindest ein Promille, insbesondere zumindest zwei Promille.

Ein Spiegel-Segment ist stets entweder sphärisch gekrümmt, plan oder parabolisch gekrümmt. Die Spiegel sind vorzugsweise so angeordnet, dass sie eine sich fortlaufend wiederholende Selbst-Zentrierung und Fokussierung des Lichtstrahls bewirken und so einer Aufweitung des Lichtstrahls entgegen wirken.

Günstig ist es, wenn zumindest ein Zweitspiegel-Segment plan ist. Plan bedeutet insbesondere ungekrümmt, wobei eine Oberfläche mit einer Krümmung mit einem Krümmungsradius von mehr als einem Kilometer als ungekrümmt betrachtet wird. Vorzugsweise ist die maximale Formabweichung einer Oberfläche eines Spiegel-Segments in einem Auftreffpunkt kleiner als λ/2, wobei λ die zentrale Vakuum-Wellenlänge des verwendeten Lichtstrahls ist, also die mit der höchsten Intensität.

Gemäß einer bevorzugten Ausführungsform weist der erste Spiegel ein drittes Erstspiegel-Segment, dass das zweite Erstspiegel-Segment radial umgibt, auf, wobei sich das dritte Erstspiegel-Segment und das zweite Erstspiegel-Segment in ihren Krümmungen unterscheiden, wobei der zweite Spiegel zumindest ein drittes Zweitspiegel-Segment, das das zweite Zweitspiegel-Segment radial umgibt, aufweist, und wobei sich das dritte Zweitspiegel-Segment und das zweite Zweitspiegel-Segment in ihren Krümmungen unterscheiden. Das dritte Erstspiegel-Segment und das dritte Zweitspiegel-Segment sind so zueinander angeordnet, dass ein in die Langwegzelle eingekoppelter Lichtstrahl zwischen beiden hin- und zurückreflektiert wird. Da der Abstand in Umfangsrichtung auf einem Spiegel-Segment konstanter Krümmung mit zunehmendem radialen Abstand zunimmt, ist es günstig, wenn jeder Spiegel drei oder mehr Spiegel-Segmente aufweist, die zueinander so angeordnet sind, dass ein Lichtstrahl zwischen einander zugeordneten Segmenten hin- und zurückreflektiert wird. Im vorliegenden Fall ist das erste Erstspiegel-Segment dem ersten Zweitspiegel-Segment zugeordnet. Ganz allgemein ist das i-te Erstspiegel-Segment dem i-ten Zweitspiegel-Segment zugeordnet, sodass ein in die Langwegzelle eingekoppelter Lichtstrahl zwischen zugeordneten Segmenten hin- und her reflektiert wird.

Vorzugsweise umfasst die Langwegzelle ein Reflexionselement, das eine Einkoppelfläche zum Einkoppeln eines Lichtstrahls in die Langwegzelle und eine Auskoppelfläche zum Auskoppeln des Lichtstrahls aus der Langwegzelle aufweist, wobei die Auskoppelfläche unter einem Versatzwinkel von zumindest 30° zur Auskoppelfläche verläuft. Günstig ist es, wenn die Einkoppelfläche und die Auskoppelfläche nahezu rechtwinklig zueinander verlaufen. Vorzugsweise weicht der Winkel zwischen Einkoppelfläche und Auskoppelfläche um zumindest 10 Winkelsekunden von 90° ab.

Besonders bevorzugt besitzt das Reflexionselement eine erste Reflexionsfläche, die so angeordnet ist, dass ein von der Einkoppelfläche eingekoppelter Lichtstrahl zunächst von einem Spiegel reflektiert wird, insbesondere mehrfach zwischen Spiegelsegmenten hin- und her reflektiert wird, danach auf die erste Reflexionsfläche trifft und im Strahlengang nach der ersten Reflexionsfläche auf ein anderes Spiegel-Segment des gleichen Spiegels trifft. Auf diese Weise kann das Reflexionselement die Lichtstrahlen von einem Spiegel-Segment auf ein benachbartes umlenken.

Günstig ist es, wenn das Reflexionselement zudem eine zweite Reflexionsfläche aufweist, die den Lichtstrahl auf eines der beiden dritten Spiegel-Segmente leitet.

Das Einkoppelelement ist vorzugsweise zwischen den Spiegeln angeordnet. Darunter wird insbesondere verstanden, dass das Einkoppelelement in dem Raum aller Punkte angeordnet ist, die auf Strecken zwischen dem ersten Spiegel und dem zweiten Spiegel liegen.

Vorzugsweise ist bei transversaler Einkopplung das Reflexionselement so ausgebildet, dass ein von der Auskoppelfläche ausgekoppelter Lichtstrahl in Verlängerung eines mittels der Einkoppelfläche eingekoppelten Lichtstrahls verläuft. Hierunter ist insbesondere zu verstehen, dass ein Abstand zwischen einer ersten Geraden, entlang derer sich der eingekoppelte Lichtstrahl erstreckt, und einer zweiten Geraden, entlang derer sich der ausgekoppelte Lichtstrahl erstreckt, und der in einer Ebene gemessen wird, der senkrecht zur ersten Geraden verläuft und den Auftreffpunkt des eingekoppelten Lichtstrahls auf das Einkoppelelement geht, höchstens 750 µm beträgt. Alternativ oder zusätzlich ist der Winkelfehler zwischen der ersten Geraden und der zweiten Geraden kleiner als 0,5°.

Eine derartige Langwegzelle lässt sich, wie oben bereits beschrieben, besonders einfach in den Strahlengang einer Vorrichtung, beispielsweise einer Spektroskopievorrichtung, einsetzen.

Vorzugsweise ist die erste Reflexionsfläche also angeordnet zum Reflektieren des Lichtstrahls, der von einem Segment mit einer ersten Krümmung auf die Reflexionsfläche fällt, auf ein Segment mit einer von der ersten Krümmung verschiedenen zweiten Krümmung.

Vorzugsweise sind die nicht-planen Segmente so gekrümmt, dass ein Abstand in Umfangsrichtung zwischen zwei benachbarten Auftreffpunkten auf dem gleichen nicht-planen Segment sich nur zu höchstens 50% von einem Mittelwert aller Abstände in Umfangsrichtung zwischen zwei benachbarten Auftreffpunkten unterscheidet. In anderen Worten sind die Abstände in Umfangsrichtung zwischen zwei benachbarten Auftreffpunkten zumindest im Wesentlichen gleich. Vorzugsweise ist dieser Mittelwert aller Abstände höchstens zehnmal, insbesondere fünfmal, so groß wie ein mittlerer Strahldurchmesser der Lichtstrahlen in den Auftreffpunkten. Der Strahldurchmesser ist definiert als die Halbwertsbreite (full width at half maximum). So kann eine besonders lange Wegstrecke in der Langwegzelle realisiert werden. Der Strahldurchmesser kann sich ändern und bezieht sich immer auf die Stelle, an der das jeweilige Merkmal gelten soll.

Gemäß einer bevorzugten Ausführungsform umfasst die Langwegzelle ein Halteelement, wobei der erste Spiegel und der zweite Spiegel zentral am Halteelement befestigt sind. Günstig ist es, wenn zumindest eines der Erstspiegel-Segmente über zumindest 75%, insbesondere zumindest 90%, seiner Fläche plan ist, zumindest eines der Zweitspiegel-Segmente über zumindest 75%, insbesondere 90%, seiner Fläche plan ist, das plane Erstspiegel-Segment von einem gekrümmten Erstspiegel-Segment umgeben ist und das plane Zweitspiegel-Segment von einem gekrümmten Zweitspiegel-Segment umgeben ist. In diesem Fall wird der Strahl oft zwischen den planen Spiegel-Segmenten hin und her reflektiert, bis der Lichtstrahl auf das gekrümmte Spiegel-Segment trifft.

Es ist möglich und stellt eine bevorzugte Ausführungsform dar, dass das Erstspiegel-Segment und/oder das Zweitspiegel-Segment einen Wechsel-Abschnitt aufweist. Dieser Wechsel-Abschnitt ist relativ zu dem sonstigen Bereich des Spiegel-Segments so geneigt, dass ein auf den Wechselabschnitt auftreffender Lichtstrahl nicht auf das zugeordnete Spiegel-Segment reflektiert wird, sondern auf ein anderes Spiegel-Segment, beispielsweise ein radial weiter außen liegendes Spiegel-Segment.

Alternativ oder zusätzlich ist es möglich, dass die Langwegzelle eine Umsetzvorrichtung aufweist, die außerhalb der konvexen Hülle der Spiegel angeordnet ist. Die konvexe Hülle ist die Menge all derjenigen Punkte, die auf einer Strecke liegen, für die gilt, dass der Endpunkt der Geraden auf dem ersten Spiegel liegt und der zweite Endpunkt auf dem zweiten Spiegel. Vorzugsweise besitzt dazu zumindest einer der Spiegel ein Loch, sodass der Lichtstrahl auf die Umsetzvorrichtung auftreffen und von diesem durch das gleiche Loch oder ein zweites Loch auf den anderen Spiegel reflektiert werden kann. Dabei wird der Lichtstrahl nicht auf das Spiegel-Segment reflektiert, das demjenigen Spiegel-Segment zugeordnet ist, in dem das Loch ausgebildet ist, sondern auf ein anderes Spiegel-Segment, beispielsweise ein radial weiter außerhalb liegendes Spiegel-Segment.

Im Rahmen der vorliegenden Beschreibung wird unter einem Spiegel eine Vorrichtung verstanden, die zumindest bezüglich einer Wellenlänge einen Reflexionsgrad von zumindest 0,95, insbesondere 0,98, aufweist.

Unter dem Einkoppelelement wird ein Element verstanden, das so relativ zu den Spiegeln angeordnet ist, dass ein auf das Einkoppelelement unter einem geeigneten Winkel auftreffender Lichtstrahl auf einen der Spiegel reflektiert wird, sodass der Lichtstrahl von diesem Spiegel auf den anderen Spiegel reflektiert wird. Das Einkoppelelement ist zudem so ausgebildet und angeordnet, dass dieser Lichtstrahl nach mehreren Reflexionen auf die Auskoppelfläche fällt und von dort aus die Langwegzelle verlässt. Das Einkoppelelement könnte daher auch Ein- und Auskoppelelement genannt werden.

Das Einkoppelelement ist vorzugsweise zwischen den Spiegeln eingeordnet. Darunter wird insbesondere verstanden, dass das Einkoppelelement in dem Raum aller Punkte angeordnet ist, die auf Strecken zwischen dem ersten Spiegel und dem zweiten Spiegel liegen.

Vorzugsweise ist der zweite Spiegel ein sphärischer oder parabolischer Spiegel. Diese Spiegel bewirken eine Fokussierung und Selbst-Zentrierung des Lichtstrahls, sodass einer Aufweitung des Lichtstrahls entgegengewirkt wird.

Vorzugsweise wendet auch der erste Spiegel dem zweiten Spiegel eine konkave Spiegelfläche zu. In diesem Fall ist der erste Spiegel vorzugsweise auch ein sphärischer und/oder parabolischer Spiegel.

Vorzugsweise ist das Einkoppelelement so ausgebildet, dass ein von der Auskoppelfläche ausgekoppelter Lichtstrahl in Verlängerung eines mittels der Einkoppelfläche eingekoppelten Lichtstrahls verläuft. Hierunter ist insbesondere zu verstehen, dass ein Abstand zwischen einer ersten Geraden, entlang derer sich der eingekoppelte Lichtstrahl erstreckt, und einer zweiten Geraden, entlang derer sich der ausgekoppelte Lichtstrahl erstreckt, höchstens 750 µm, insbesondere höchstens 500 µm, beträgt.

Vorzugsweise weist das Einkoppelelement, das auch als Einkoppel- und Umlenkelement bezeichnet werden könnte, eine Beschichtung auf. Günstig ist es, wenn der Abstand der beiden Geraden vorzugsweise höchstens das 1,4-fache der Dicke des Einkoppelelements beträgt.

Alternativ oder zusätzlich ist der Winkelfehler zwischen der ersten Geraden und der zweiten Geraden kleiner als 0,5°.

Eine derartige Langwegzelle lässt sich, wie oben bereits beschrieben, besonders einfach in den Strahlengang einer Vorrichtung, beispielsweise einer Spektroskopievorrichtung, einsetzen.

Vorzugsweise besitzt das Einkoppelelement eine erste Reflexionsfläche, die so angeordnet ist, dass ein von der Einkoppelfläche eingekoppelter Lichtstrahl zunächst von zumindest einem Spiegel reflektiert wird, insbesondere mehrfach von den Spiegeln hin- und zurückreflektiert wird, danach auf die erste Reflexionsfläche trifft und im Strahlengang nach der Reflexionsfläche auf einen der Spiegel trifft. In anderen Worten trifft der Lichtstrahl zunächst auf die Einkoppelfläche und wird von dort auf einen der Spiegel reflektiert. Von diesem Spiegel wird er auf den anderen Spiegel reflektiert. Es ist möglich, nicht aber notwendig, dass der Lichtstrahl dann mehrfach zwischen den beiden Spiegeln hin und her reflektiert wird. Danach trifft der Lichtstrahl auf die Reflexionsfläche und wird von dort erneut auf einen der Spiegel reflektiert. Mittels eines solchen Einkoppelelements kann der Lichtstrahl auf eine andere Spur gesetzt werden. In anderen Worten liegen mehrere Auftreffpunkte des Lichtstrahls vor dem Auftreffen auf dem Einkoppelelement entlang einer ersten Ellipse, insbesondere eines ersten Kreises, und nach dem Auftreffen auf dem Einkoppelelement entlang einer zweiten Ellipse, insbesondere eines zweiten Kreises.

Dabei ist es günstig, wenn ein radialer Abstand eines Auftreffpunkts des Lichtstrahls, der von der Reflexionsfläche auf einen der Spiegel reflektiert wurde, signifikant kleiner oder größer ist als der radiale Abstand der Auftreffpunkte des Lichtstrahls vor Reflexion an der ersten Reflexionsfläche. In anderen Worten ist es günstig, wenn die radialen Abstände der Auftreffpunkte des Lichtstrahls vor Auftreffen auf die erste Reflexionsfläche im Wesentlichen gleich bleiben und die Reflexion an der Reflexionsfläche dazu führt, dass der radiale Abstand der Auftreffpunkte des Lichtstrahls nach Reflexion an der ersten Reflexionsfläche deutlich kleiner oder deutlich größer ist. Es ist beispielsweise günstig, wenn der radiale Abstand nach Reflexion an der ersten Reflexionsfläche sich um einen Radialversatz von dem Radialabstand des Auftreffpunkts des Lichtstrahls unmittelbar vor Auftreffen auf die erste Reflexionsfläche unterscheidet, wobei der Radialversatz größer ist als das Doppelte der Varianz der radialen Abstände der Auftreffpunkte des Lichtstrahls vor Auftreffen auf die Reflexionsfläche.

Der radiale Abstand ist der Abstand zu einer optischen Längsachse der Langwegzelle. Wird der Lichtstrahl - was eine bevorzugte Ausführungsform darstellt - zumindest drei Mal zu dem ersten und dem zweiten Spiegel hin- und zurückreflektiert, so liegen die Auftreffpunkte vorzugsweise auf Ellipsen, insbesondere Kreisen, um den Nullpunkt der Radialachse.

Ein Vorteil an einer derartigen Langwegzelle ist, dass der Lichtstrahl eine besonders lange Weglänge in der Langwegzelle zurücklegen muss. Die Abstände der Auftreffpunkte in Umfangsrichtung hängen bei gegebenem Spiegelabstand von der Krümmung des jeweiligen Spiegels ab. Das führt dazu, dass bei Spiegeln mit konstanter Krümmung der Abstand in Umfangsrichtung von benachbarten Auftreffpunkten umso größer wird, je größer der radiale Abstand der Auftreffpunkte ist. Um die zur Verfügung stehende Spiegelfläche optimal auszunutzen, sollten die Auftreffpunkte möglichst dicht beieinander liegen.

Es ist gemäß einer bevorzugten Ausführungsform daher vorgesehen, dass die Krümmung zumindest eines Spiegels, insbesondere aller Spiegel, sich nach radial außen verändert, insbesondere vergrößert. Nach Reflexion durch das Einkoppelelement verlaufen die Auftreffpunkte dann auf beiden Spiegeln auf einer Ellipse, insbesondere einem Kreis. Die Auftreffpunkte des Lichtstrahls nach Auftreffen auf die erste Reflexionsfläche liegen auf einer zweiten Ellipse, insbesondere einem zweiten Kreis, der einen kleineren oder größeren Durchmesser hat, wobei sich die Abstände der Auftreffpunkte in Umfangsrichtung auf beiden Ellipsen vorzugsweise nicht oder nicht signifikant unterscheiden.

Vorzugsweise umfasst das Einkoppelelement eine zweite Reflexionsfläche, die so relativ zu Einkoppelfläche angeordnet ist, dass ein von der Einkoppelfläche eingekoppelter Lichtstrahl zunächst mehrfach von den Spiegeln hin- und zurückreflektiert wird, danach auf die erste Reflexionsfläche trifft, danach mehrfach von den Spiegeln hin- und zurückreflektiert wird, danach auf die zweite Reflexionsfläche trifft und nachfolgend erneut mehrfach von den Spiegeln hin- und zurückreflektiert wird.

Vorzugsweise liegen die Auftreffpunkte des Lichtstrahls in seinem Abschnitt zwischen der ersten Reflexionsfläche und der zweiten Reflexionsfläche auf einer ersten Ellipse, insbesondere einem ersten Kreis. Gemäß einer bevorzugten Ausführungsform besitzt das Einkoppelelement eine dritte Reflexionsfläche, wobei die Auftreffpunkte des Lichtstrahls in seinem Abschnitt zwischen der zweiten Reflexionsfläche und der dritten Reflexionsfläche auf einer ersten Ellipse, insbesondere einem zweiten Kreis, die zur ersten Ellipse, insbesondere zum ersten Kreis, zumindest im Wesentlichen konzentrisch ist, liegen. Unter dem Merkmal, dass die zweite Ellipse, insbesondere der zweite Kreis, zur ersten Ellipse, insbesondere zum ersten Kreis, zumindest im Wesentlichen konzentrisch ist, wird insbesondere verstanden, dass die Brennpunkte der Ausgleichsellipsen durch die jeweiligen Auftreffpunkte um höchstens das Doppelte einer Halbwertsbreite des Lichtstrahls voneinander entfernt liegen. Im Falle eines Kreises unterscheiden sich die Mittelpunkte der Ausgleichskreise durch die jeweiligen Auftreffpunkte um höchstens das Doppelte einer Halbwertsbreite des Lichtstrahls.

Vorzugsweise hat die zweite Ellipse eine zweite Summe aus großer und kleiner Halbachse, die sich von der ersten Summe aus großer und kleiner Halbachse der ersten Ellipse um zumindest eine Halbwertsbreite des Lichtstrahls unterscheidet. Insbesondere hat vorzugsweise der zweite Kreis einen Kreisdurchmesser, der sich vom ersten Kreisdurchmesser um zumindest das Doppelte einer Halbwertsbreite des Lichtstrahls unterscheidet.

Vorzugsweise besitzt die erste Reflexionsfläche eine erste Teil-Fläche und eine zweite Teil-Fläche, wobei ein Öffnungswinkel zwischen den beiden Teil-Flächen zumindest 45°, insbesondere zumindest 60°, beträgt und/oder höchstens 135°, insbesondere 120°. Günstig ist es, wenn der Öffnungswinkel sich um zumindest 10 Winkelsekunden von 90° unterscheidet.

Gemäß einer bevorzugten Ausführungsform umfasst die Langwegzelle ein Halteelement, wobei der erste Spiegel und der zweite Spiegel zentral am Halteelement befestigt sind. Unter dem Merkmal, dass die Spiegel zentral am Halteelement befestigt sind, wird verstanden, dass jeder Spiegel einen Zentralbereich hat, der radial innen liegt und der mit dem Spiegel verbunden ist. In anderen Worten verlaufen die Lichtstrahlen radial außerhalb vom Halteelement. Günstig ist es, wenn eine Längsachse der Langwegzellen durch das Halteelement verläuft. Das Halteelement ermöglicht die Ausrichtung der Spiegel zueinander. So kann zumindest ein Spiegel arretierbar längsbeweglich am Halteelement befestigt sein, sodass der Spiegel zunächst relativ zum Halteelement verschoben und danach arretiert werden kann. Alternativ oder zusätzlich umfasst das Halteelement zudem vorzugsweise eine Winkellageneinstellvorrichtung, mittels der die Winkellage, unter der zumindest einer der Spiegel relativ zum Halteelement befestigt ist, einstellbar ist.

Im Folgenden wird die Erfindung anhand der beigefügten Zeichnungen näher erläutert. Dabei zeigt:
- Figur 1: einen schematischen Querschnitt durch eine Langwegzelle gemäß einer Ausführungsform der Erfindung,
- Figur 2: eine schematische Ansicht, die den Pfad des Lichtstrahls illustriert.
- Figur 3: eine weitere Ausführungsform einer erfindungsgemäßen Langwegzelle und
- Figur 4: eine weitere Ausführungsform einer erfindungsgemäßen Langwegzelle, bei der der Wechsel zwischen zwei Segmenten durch ein tortenstückförmiges Teilstück des inneren Segmentes und ein anschließend vom Lichtstrahl getroffenes Teilstück des äußeren Segmentes realisiert wird,
- Figur 5: eine weitere erfindungsgemäße Langwegzelle mit einer Umsetzvorrichtung zum Umsetzen des Lichtstrahls von einem Paar SpiegelSegmente auf ein zweites Paar Spiegel-Segmente und
- Figur 6: zeigt in der Teilfigur 6a eine weitere erfindungsgemäße Langwegzelle, bei der das innere Paar einander zugeordneter Spiegel-Segmente plan ist mit einem ersten Teil des Strahlverlaufs, und das Teilbild 6b zeigt schematisch den vollständigen Strahlverlauf.
- Figur 7: zeigt eine Langwegzelle gemäß einer weiteren Ausführungsform
- Figur 8a: eine schematische Ansicht einer Langwegzelle gemäß einer weiteren Ausführungsform,
- Figur 8b: einen Ausschnitt mit dem Einkoppelelement aus der Langwegzelle nach Figur 8a,
- Figur 9: einen schematischen Querschnitt durch eine Langwegzelle gemäß einer weiteren Ausführungsform
- Figur 10: zeigt eine weitere Ausführungsform einer Langwegzelle.

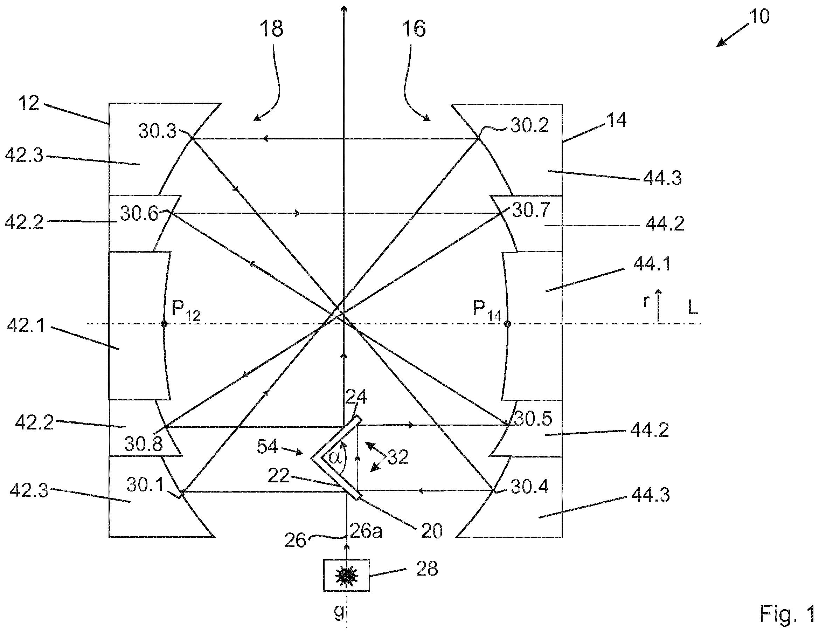

Figur 1 zeigt eine erfindungsgemäße Langwegzelle 10 in Form einer Herriott-Zelle, die einen ersten Spiegel 12 und einen zweiten Spiegel 14 aufweist. Der erste Spiegel 12 besitzt eine erste Spiegelfläche 16, der zweite Spiegel 14 besitzt eine zweite Spiegelfläche 18, die dem ersten Spiegel 12 zugewandt ist. Der erste Spiegel 12 ist im vorliegenden Fall abschnittsweise sphärisch und hat einen ersten Krümmungsradius R₁₂(r), der für jeden radialen Abstand r einem zweiten Krümmungsradius R₁₄(r) des zweiten Spiegels entspricht.

Es ist aber auch möglich, dass einer oder beide Spiegel ganz oder abschnittsweise Parabolspiegel sind. Auch in diesem Fall entspricht vorzugsweise der Krümmungsradius eines Spiegels für jeden radialen Abstand r dem zweiten Krümmungsradius R₁₄(r) des zweiten Spiegels.

Die Langwegzelle 10 umfasst ein Reflexionselement 54, das eine Einkoppelfläche 22 und eine Auskoppelfläche 24 besitzt. Der Abschnitt des Reflexionselements 54, an dem die Einkoppelfläche 22 und die Auskoppelfläche 24 ausgebildet sind, kann als Einkoppelelement 20 bezeichnet werden.

Fällt ein Lichtstrahl 26, insbesondere ein Laserstrahl, der von einem Laser 28 ausgesandt wird, auf die Einkoppelfläche 22, so reflektiert diese den Lichtstrahl 26 auf den ersten Spiegel 12. Der Lichtstrahl 26 trifft daher zunächst in einem ersten Auftreffpunkt 30.1 auf den ersten Spiegel 12 auf. Danach reflektiert der erste Spiegel 12 den Lichtstrahl 26 auf einen zweiten Auftreffpunkt 30.2 auf dem zweiten Spiegel 14, danach trifft der Lichtstrahl 26 auf einen dritten Auftreffpunkt 30.3 und einen vierten Auftreffpunkt 30.4.

Der Lichtstrahl 26 ist in anderen Worten mehrfach von den Spiegeln 12, 14 hin-und zurückreflektiert worden. Danach - oder nach weiteren Reflexionen an den Spiegeln - trifft der Lichtstrahl 26 auf eine erste Reflexionsfläche 32, die den Lichtstrahl 26 auf einen fünften Auftreffpunkt 30.5 auf der zweiten Spiegelfläche 18 leitet. Im vorliegenden Fall erstreckt sich die erste Reflexionsfläche 32 entlang zweier zueinander senkrecht verlaufender Ebenen.

Nachdem der Laserstrahl die Auftreffpunkte 30.6, 30.7 und 30.8 durchlaufen hat, trifft er auf die Auskoppelfläche 24. Der entstehende ausfallende Lichtstrahl 26b, der ein Abschnitt des Lichtstrahls 26 ist, verläuft in direkter Verlängerung des einfallenden Abschnitts 26a des Lichtstrahls 26. In anderen Worten existiert eine Gerade g, entlang derer sich sowohl der einfallende Lichtstrahl 26a als auch der ausfallende Lichtstrahl 26b erstrecken.

Es ist zu erkennen, dass die Auskoppelfläche 24 unter einem Versatzwinkel α zur Einkoppelfläche 22 orientiert ist. Im vorliegenden Fall beträgt a= 90°, was eine mögliche Ausführungsform beim zweidimensionalen Strahlenverlauf darstellt. Besonders günstig ist es jedoch, wenn der Versatzwinkel beim üblicherweise auftretenden dreidimensionalen Strahlenverlauf um zumindest 10 Bogensekunden von 90° verschieden ist.

Die Langwegzelle 10 besitzt eine Längsachse L. Die Längsachse L verläuft durch die beiden Punkte P₁₂, P₁₄, die sich dadurch auszeichnen, dass ein gedachter Lichtstrahl zwischen diesen beiden Punkten beständig hin- und her reflektiert würde.

In einem Kreiskoordinatensystem um die Längsachse L wird die Abstandskoordinate r von der Längsachse L aus gemessen. Die z-Koordinate in diesem Koordinatensystem kann grundsätzlich beliebig gewählt werden, vorzugsweise ist aber z = 0 an dem Punkt der auf der Längsachse L liegt und der genau zwischen den Punkten P₁₂ und P₁₄ liegt.

Es sei darauf hingewiesen, dass Figur 1 lediglich eine schematische Seitenansicht der Langwegzelle 10 zeigt. Es ist möglich, dass die beiden Spiegel zwischen einander einen größeren Abstand haben.

Wie Figur 1 zeigt, besitzt der erste Spiegel 12 ein erstes Erstspiegel-Segment 42.1, ein zweites Erstspiegel-Segment 42.2 und ein drittes Erstspiegel-Segment 42.3. Das zweite Erstspiegel-Segment 42.2 umgibt das erste Erstspiegel-Segment 42.1 radial. Das dritte Erstspiegel-Segment 42.3 umgibt das zweite Erstspiegel-Segment 42.2 radial. Die Segmente 42.1, 42.2, 42.3 sind sphärisch gekrümmt und unterscheiden sich in ihren Krümmungen und/oder Brennweiten. So ist der Krümmungsradius R_{42.1} des ersten Erstspiegel-Segments 42.1 größer als der Krümmungsradius R_{42.2} des zweiten Erstspiegel-Segments 42.2. Der Krümmungsradius R ist in der vorliegenden Ausführungsform umso kleiner, je größer der Abstand r des jeweiligen Segments von der Längsachse L ist. Es sind aber auch Ausführungsformen möglich, in denen der Krümmungsradius R zumindest nicht immer kleiner wird, je größer der Abstand r des jeweiligen Segments von der Längsachse L ist.

Jedem Erstspiegel-Segment 42.i ist ein Zweitspiegel-Segment 44.i (i=1, 2, ...) zugeordnet. Der Lichtstrahl 26 wird in der vorliegenden Ausführungsform solange zwischen dem Paar aus Erstspiegel-Segment 42.i und zugeordnetem Zweitspiegel-Segment 44.i hin- und her reflektiert, bis es auf eine Reflexionsfläche oder die Auskoppelfläche 24 trifft.

Der einfallende Lichtstrahl 26a trifft zunächst auf die Einkoppelfläche 22 und dann nach Durchlaufen der Auftreffpunkte 30.1, 30.2, 30.3 und 30.4 auf die erste Reflexionsfläche 32. Im Strahlengang nach der ersten Reflexionsfläche 32 trifft der Lichtstrahl 26 dann im fünften Auftreffpunkt 30.5 auf den ersten Spiegel 12. Nach Durchlaufen der Auftreffpunkte 30.6, 30.7 und 30.8 trifft der Lichtstrahl 26 auf die Auskoppelfläche 24 und wird aus der Langwegzelle 10 ausgekoppelt. Selbstverständlich ist es möglich und stellt eine bevorzugte Ausführungsform dar, dass das Einkoppelelement 20 weitere Reflexionsflächen aufweist. In diesem Fall ist es vorteilhaft, wenn der erste Spiegel 12 und/oder der zweite Spiegel 14 zusätzliche Segmente aufweist.

Figur 1 zeigt, dass die erste Reflexionsfläche 32 dazu dient, den Lichtstrahl von einem Segment auf das nächste umzusetzen. Die Segmente sind - was eine bevorzugte Ausführungsform darstellt - so ausgebildet, dass der Lichtstrahl 26 stets zwischen dem gleichen Paar einander zugeordneter Spiegel-Segmente aus Erstspiegel-Segment und Zweitspiegel-Segment hin- und zurückreflektiert wird, bis er auf eine Reflexionsfläche trifft. Danach läuft der Lichtstrahl ausschließlich auf einem zweiten Paar aus Erstspiegel-Segment und Zweitspiegel-Segment, bis er entweder auf die Auskoppelfläche oder eine weitere Reflexionsfläche trifft.

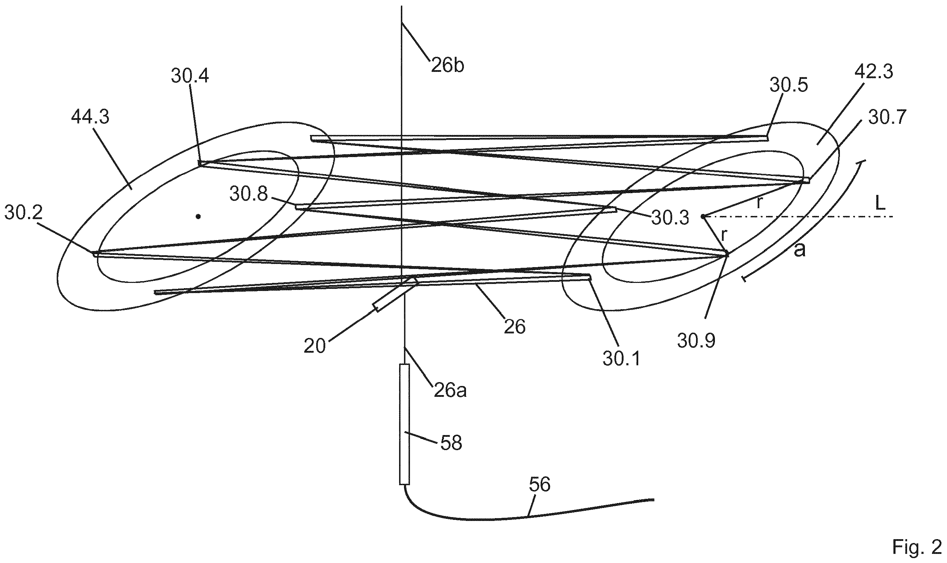

Figur 2 zeigt schematisch den Strahlweg des Lichtstrahls 26, den dieser zwischen den Segmenten 42.3 und 44.3 zurücklegt. Ein Abstand a in Umfangsrichtung zwischen benachbarten Auftreffpunkten, beispielsweise zwischen den Auftreffpunkten 30. 39.7 oder 30.9 und 30.1, ist in guter Näherung konstant. Ein radialer Abstand r ist für jeden Auftreffpunkt im Wesentlichen gleich. In anderen Worten gilt r_{30.7}= r_{30.9}, wobei zwei Abstände als im Wesentlichen gleich betrachtet wird, wenn sich die Abstände um weniger als 25% unterscheiden.

Für ein radial weiter innen liegendes Segment, im vorliegenden Fall für das Erstspiegel-Segment 42.2 und das Zweitspiegel-Segment 44.2, ist der Abstand a in Umfangsrichtung zwischen benachbarten Auftreffpunkten ebenfalls vorzugsweise im Wesentlichen gleich.

Die Langwegzelle 10 ist so ausgebildet, dass der Abstand a in Umfangsrichtung zweier benachbarter Auftreffpunkte größer ist als die doppelte Halbwertsbreite des Lichtstrahls. Vorzugsweise ist dieser Abstand zudem kleiner als das 20-fache, insbesondere als das 10-fache, der Halbwertsbreite. Um diese Randbedingungen unabhängig vom Segment einhalten zu können, unterscheiden sich die Krümmungen der einzelnen Segmente 42.e, 44.i für unterschiedliche i.

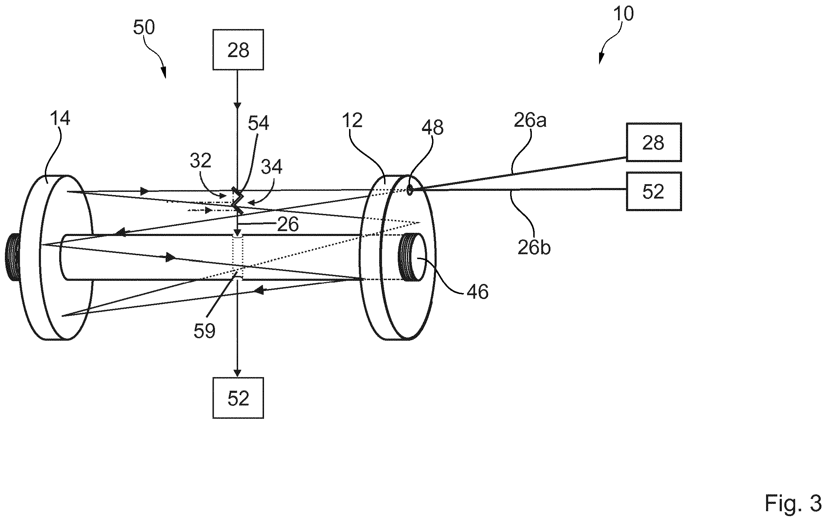

Figur 2 zeigt, dass die Langwegzelle 10 eine Lichtleitfaser 56 aufweisen kann, bei der der Lichtstrahl 26 vom Laser 28 auf das Einkoppelelement 20 zugeführt wird. Günstig ist es, wenn die Lichtleitfaser 56 in einem Auskoppelelement 58 endet. Figur 3 zeigt eine weitere Ausführungsform einer erfindungsgemäßen Langwegzelle 10, bei der die Spiegel 12, 14 wie in Figur 1 gezeigt aufgebaut sind. Die Langwegzelle 10 umfasst ein Halteelement 46, an denen die beiden Spiegel 12, 14 zentral befestigt sind. Es ist zu erkennen, dass der Lichtstrahl 26 durch eine Öffnung 48 im Spiegel 12 in die Langwegzelle 10 eintritt und durch die gleiche Öffnung 48 wieder austritt.

Figur 3 zeigt zudem schematisch das Reflexionselement 54, an dem die Reflexionsflächen 32 und 34 ausgebildet sind. Bei den Ausführungsformen gemäß der Figuren 1 und 2 ist das Reflexionselement Teil des Einkoppelelements 20 (vgl. Figur 1). Der Übersichtlichkeit halber sind in Figur 3 die Strahlwege nach Reflexion an der ersten Reflexionsfläche 32 und der zweiten Reflexionsfläche 34 nur schematisch eingezeichnet. Der Lichtstrahl 26 wird in diesem Fall beispielsweise durch ein Loch 59 im Halteelement 46 ausgekoppelt. Alternativ kann die Detektionsvorrichtung 52 auch auf dem Halteelement 46 befestigt oder darin enthalten sein.

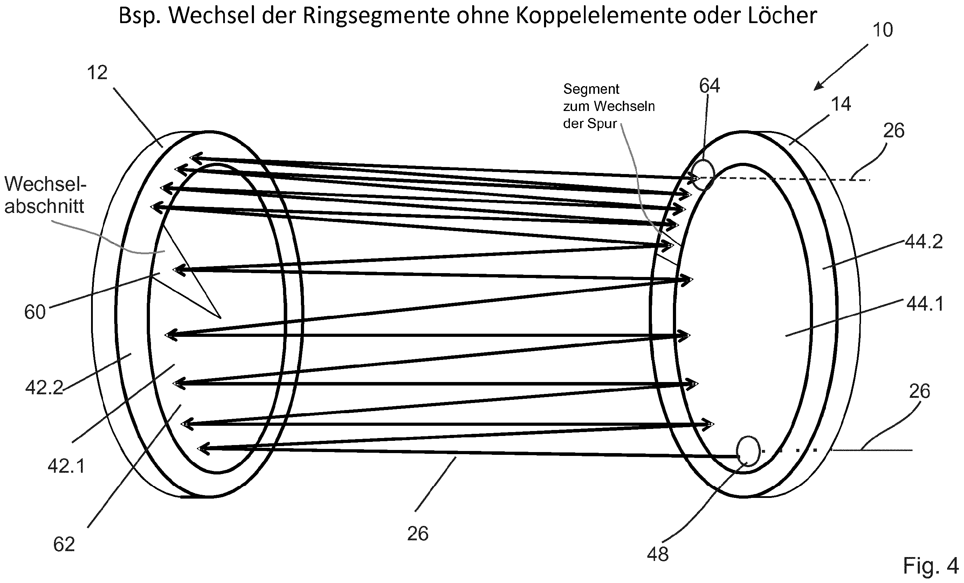

Figur 4 zeigt eine zweite Ausführungsform einer erfindungsgemäßen Langwegzelle 10, bei der der Lichtstrahl 26 einen kompletten Umlauf vollführt. Es ist alternativ möglich, dass der Lichtstrahl 26 durch die Öffnung 48 in die Langwegzelle 10 eingekoppelt wird. Das erste Erstspiegel-Segment 42.1 ist gebildet aus einem Wechselabschnitt 60 und einer Spiegelfläche 62. Die Spiegelfläche 62 ist sphärisch gekrümmt. Das zugeordnete erste Zweitspiegel-Segment 44.1 ist ebenfalls sphärisch gekrümmt und parallel zur Spiegelfläche 62 ausgerichtet. Licht, das auf die Spiegelfläche 62 trifft, wird auf das erste Zweitspiegel-Segment 44.1 reflektiert. Trifft der Lichtstrahl 26 auf den Wechselabschnitt 60, so wird er auf das zweite Zweispiegel-Segment 44.2 reflektiert. Vor dort aus wird es auf das zweite Erstspiegel-Segment 42.2 reflektiert. Durch eine zweite Öffnung 64 wird der Lichtstrahl 26 aus der Langwegzelle 10 wieder ausgekoppelt.

Alternativ ist möglich, dass ein Abschnitt eines Spiegel-Segments, ähnlich wie der Wechselabschnitt 60, so ausgebildet ist, dass der Lichtstrahl 26 seitlich eingekoppelt werden kann.

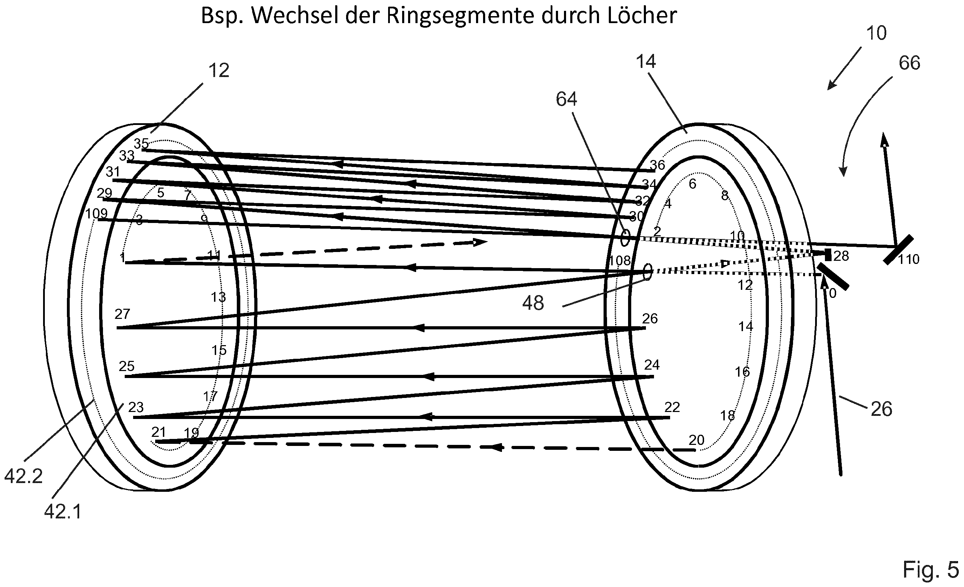

Figur 5 zeigt eine weitere erfindungsgemäße Langwegzelle 10, die eine Umsetzvorrichtung 66 aufweist. Diese Umsetzvorrichtung ist außerhalb des Volumens zwischen den Spiegeln 12, 14 angeordnet und reflektiert den Lichtstrahl von einem Erstspiegel-Segment auf ein anderes. Die Zahlen benachbart zu den Auftreffpunkten nummerieren die Auftreffpunkte durch, sodass der Strahlverlauf leichter verfolgt werden kann. Es ist zu erkennen, dass der Lichtstrahl 26 durch die Öffnung 48 eingekoppelt und durch die zweite Öffnung 64 ausgekoppelt wird.

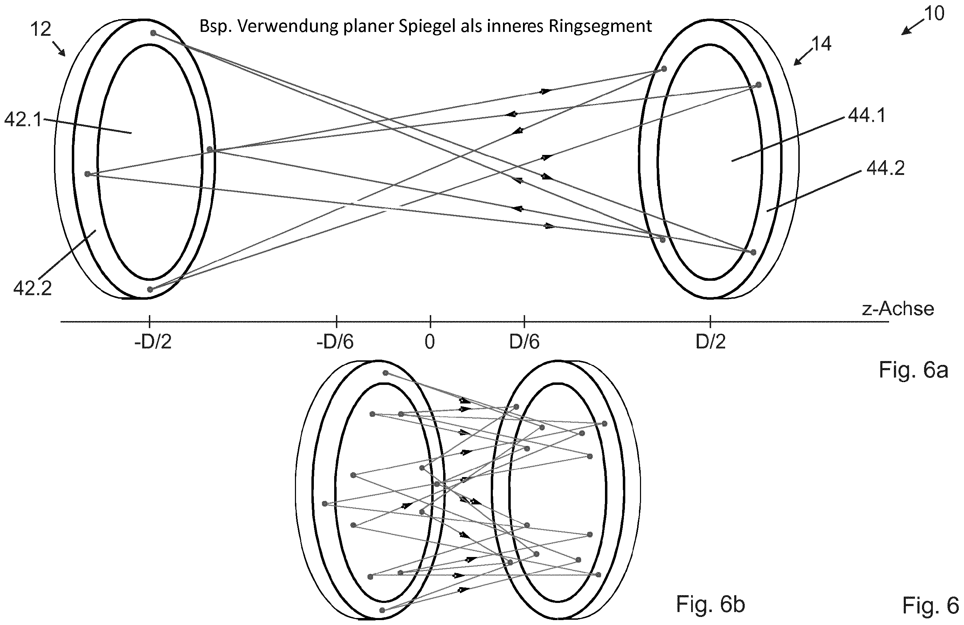

Figur 6 zeigt in den Teilfiguren 6a und 6b schematisch den Strahlverlauf für eine Langwegzelle 10, bei der das erste Erstspiegel-Segment 42.1 und das erste Zweitspiegel-Segment 44.1 plan sind und dass zweite Erstspiegel-Segment 42.2 und das zweite Zweitspiegel-Segment 44.2 sphärisch gekrümmt sind.

Figur 6a zeigt den Fall, dass der Abstand der beiden Spiegel 12, 14 so groß ist, dass der Strahlengang der einer Herriott-Zelle entspricht.

Figur 6b zeigt den Strahlverlauf, wenn der Abstand der beiden Spiegel 12, 14 so klein ist (hier: ein Drittel des Abstands gemäß Figur 6a), dass deutlich mehr Reflexionen erfolgen. Die Positionen der Auftreffpunkte auf 44.1 entsprechen den Strahlpositionen im Querschnitt bei z = -1/6 D(Spiegelabstand aus Fig. 6a). Die Positionen der Auftreffpunkte auf 42.1 entsprechen den Strahlpositionen im Querschnitt bei z = +1/6 D. Die Anzahl der Reflektionen auf den inneren planen Segmenten ist in diesem Fall doppelt so groß wie die auf den äußeren gekrümmten Segmenten. Schiebt man die Spiegel weiter zusammen, so dass der Abstand gleich D/(2N+1) ist, wobei N eine natürlich Zahl ist, so ist die Anzahl der Reflektionen auf den inneren planen Segmenten 2N mal größer als auf den äußeren gekrümmten. So ließen sich beispielsweise 100 Reflektionen auf dem äußeren Segment realisieren und bei einem dreizehntel des Spiegelabstandes berechnet für die gewöhnliche Herriott-Zelle oder analog dem dreizehnfachen Krümmungsradius der Spiegel erhielte man 12x100 = 1200 Reflektionen auf den planen Spiegeln und somit 1300 Reflektionen insgesamt. Bei einem Spiegelabstand von nur etwa 77 cm erreicht man so eine optische Weglänge von über einem Kilometer, bei gleichzeitiger Erhaltung der Strahleigenschaften und Robustheit wie sie für die gewöhnliche Herriott-Zelle üblich sind.

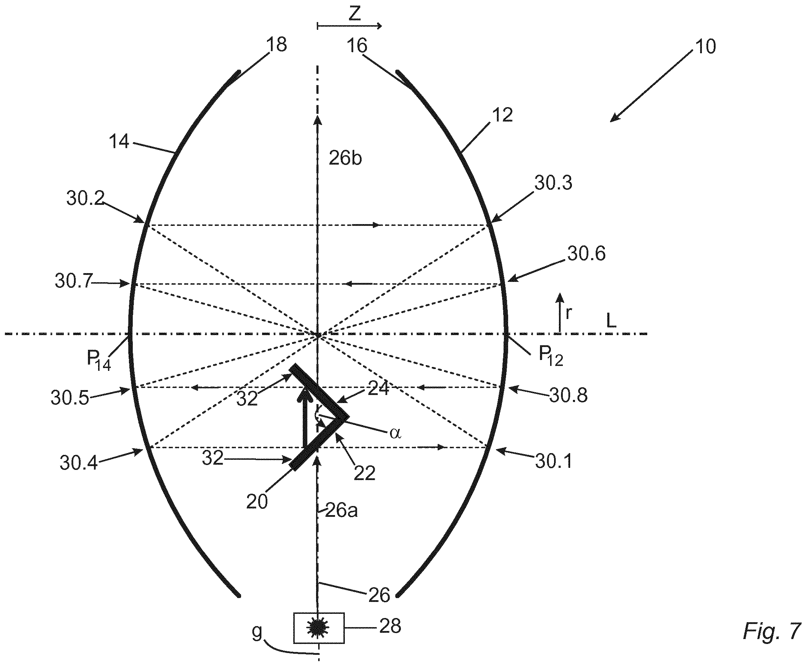

Figur 7 zeigt eine Langwegzelle 10 in Form einer Herriott-Zelle, die einen ersten Spiegel 12 und einen zweiten Spiegel 14 aufweist. Der erste Spiegel 12 besitzt eine erste konkave Spiegelfläche 16, der zweite Spiegel 14 besitzt eine zweite Spiegelfläche 18, die dem ersten Spiegel 12 zugewandt ist. Der erste Spiegel 12 ist im vorliegenden Fall sphärisch und hat einen ersten Krümmungsradius R₁₂, der einem zweiten Krümmungsradius R₁₄ des zweiten Spiegels entspricht. Es ist aber auch möglich, dass einer oder beide Spiegel Parabolspiegel sind.

Die Langwegzelle 10 umfasst ein Einkoppelelement 20, das eine Einkoppelfläche 22 und eine Auskoppelfläche 24 besitzt. Fällt ein Lichtstrahl 26, insbesondere ein Laserstrahl, der von einem Laser 28 ausgesandt wird, auf die Einkoppelfläche 22, so reflektiert diese den Lichtstrahl 26 auf den ersten Spiegel 12. Der Lichtstrahl 26 trifft daher zunächst in einem ersten Auftreffpunkt 30.1 auf den ersten Spiegel 12 auf. Danach reflektiert der erste Spiegel 12 den Lichtstrahl 26 auf einen zweiten Auftreffpunkt 30.2 auf dem zweiten Spiegel 14, danach trifft der Lichtstrahl 26 auf einen dritten Auftreffpunkt 30.3 und einen vierten Auftreffpunkt 30.4.

Der Lichtstrahl 26 ist in anderen Worten mehrfach von den Spiegeln 12, 14 hin- und zurückreflektiert worden. Danach trifft der Lichtstrahl 26 auf eine erste Reflexionsfläche 32, die den Lichtstrahl 26 auf einen fünften Auftreffpunkt 30.5 auf der zweiten Spiegelfläche 18 leitet. Im vorliegenden Fall erstreckt sich die erste Reflexionsfläche 32 entlang zweier Ebenen, die einen Winkel miteinander bilden, der kein rechter Winkel ist. Im schematisch gezeigten zweidimensionalen Fall würde sich ein rechter Winkel ergeben, der aber im dreidimensionalen Fall nicht vorliegt.

Nachdem der Laserstrahl die Auftreffpunkte 30.6, 30.7 und 30.8 durchlaufen hat, trifft er auf die Auskoppelfläche 24. In Figur 7 ist eine Seitenansicht gezeigt, sodass der Lichtstrahl zwischen den Punkten 30.4 und 30.5 einerseits und hinter dem Punkt 30.8 andererseits quasi parallel verlaufend eingezeichnet ist. Der entstehende ausfallende Lichtstrahl 26b, der Teil des Lichtstrahls 26 ist, verläuft in die direkte Verlängerung des einfallenden Lichtstrahls 26a. In anderen Worten existiert eine Gerade g, entlang derer sich sowohl der einfallende Lichtstrahl 26a als auch der ausfallende Lichtstrahl 26b erstrecken.

Es ist zu erkennen, dass die Auskoppelfläche 24 unter einem Versatzwinkel α zur Einkoppelfläche 22 orientiert ist. Im vorliegenden Fall beträgt α= 90°, was ausschließlich für den zweidimensionalen Fall eine bevorzugte Ausführungsform darstellt. Für den in der Praxis vorkommenden dreidimensionalen Fall muss sich α von 90° unterscheiden, damit eine gute Justierung ermöglicht wird, welche sich durch Rotationssymmetrie, bzw. durch die kreisförmige Anordnung der Auftreffpunkte auf den Spiegeln auszeichnet. Für je einen Satz Eingangsparameter: "Krümmungsradien(Brennweiten) der Spiegel, Spiegelabstand, Position des Einkoppelelementes, Radius des aktuellen (vor dem Umlenken auf die nächste Bahn bestehenden) kreisförmigen Musters der Reflexe auf den Spiegeln, Radius des nächsten (auf der neuen Bahn entstehenden) kreisförmigen Musters der Reflexe auf den Spiegeln" gibt es genau zwei mögliche Winkel für a, deren Größe mittels einer Simulation unter Verwendung von Raytracing bestimmt wird.

Die Langwegzelle 10 besitzt eine Längsachse L. Im vorliegenden Fall verläuft die Längsachse durch die beiden Punkte P₁₂, P₁₄, die sich dadurch auszeichnen, dass ein gedachter Lichtstrahl zwischen diesen beiden Punkten beständig hin- und her reflektiert würde. In einer Schnittansicht wie in Figur 7 ist die Längsachse eine Drehsymmetrieachse für den ersten Spiegel 12. Zudem können die Spiegeloberflächen 16, 18 in einem Kreiskoordinatensystem um die Längsachse L als konstant in einer Abstandskoordinate r dargestellt werden. Die Abstandskoordinate r bezeichnet den Abstand von der Längsachse L. Die z-Achse verläuft entlang der Längsachse L. Die Stelle z=0 kann grundsätzlich beliebig gewählt werden.

Es sei darauf hingewiesen, dass Figur 7 lediglich eine schematische Seitenansicht der Langwegzelle 10 zeigt. Aus diesem Grund sind auch die eingezeichneten Winkel verzerrt dargestellt. Es ist möglich, dass die beiden Spiegel zwischen sich einen größeren Abstand voneinander haben.

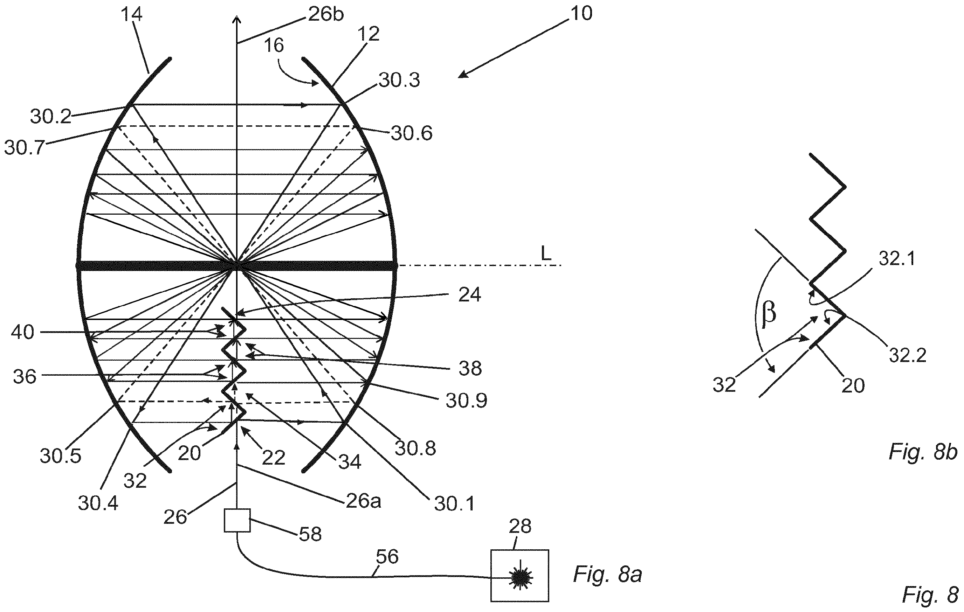

Figur 8a zeigt eine zweite Ausführungsform einer Langwegzelle 10, deren Einkoppelelement 20 eine zweite Reflexionsfläche 34 aufweist, auf die der Lichtstrahl 26 auftrifft, nachdem er im Auftreffpunkt 30.8 reflektiert wurde. Die zweite Reflexionsfläche 34 reflektiert den Lichtstrahl 26 auf den Auftreffpunkt 30.9. Das Einkoppelelement 20 besitzt zudem eine dritte Reflexionsfläche 36, eine vierte Reflexionsfläche 38 und eine fünfte Reflexionsfläche 40. Wie durch den eingezeichneten Weg des Lichtstrahls 26 zu erkennen ist, legt dieser in der Langwegzelle 10 einen besonders langen Weg zurück.

Figur 8a zeigt, dass die Langwegzelle 10 eine Lichtleitfaser 56 aufweisen kann, bei der der Lichtstrahl 26 vom Laser 28 auf das Einkoppelelement 20 zugeführt wird. Günstig ist es, wenn die Lichtleitfaser 56 in einem Auskoppelelement 58 endet.

Figur 8b zeigt das Einkoppelelement 20 in einer Vergrößerung. Es ist zu erkennen, dass die erste Reflexionsfläche 32 eine erste Teil-Fläche 32.1 und eine zweite Teil-Fläche 32.2 aufweist, die mit der ersten Fläche 32.1 einen Öffnungswinkel β einschließt. Der Öffnungswinkel β ist der Winkel zwischen den beiden Tangentialebenen an die Flächen 32.1, 32.2 jeweils in dem Punkt, in dem der Lichtstrahl 26 auftrifft.

Der Öffnungswinkel β zwischen den beiden Teil-Flächen 32.1, 32.2 beträgt vorzugsweise zumindest 45°, insbesondere zumindest 60°, und/oder höchstens 135°, insbesondere 120°. Es hat sich als vorteilhaft erwiesen, wenn der Öffnungswinkel β keinen Wert zwischen 89°, vorzugsweise 89,5° einerseits und 90,5°, vorzugsweise 91°, andererseits einnimmt.

Für die Teil-Flächen existieren immer genau zwei mögliche Orientierungen zueinander, bei denen der Querschnitt des Musters der Lichtstrahl-Reflexionen möglichst kreisförmig ist. Vorzugsweise wird diese Orientierung mittels Raytracing bestimmt.

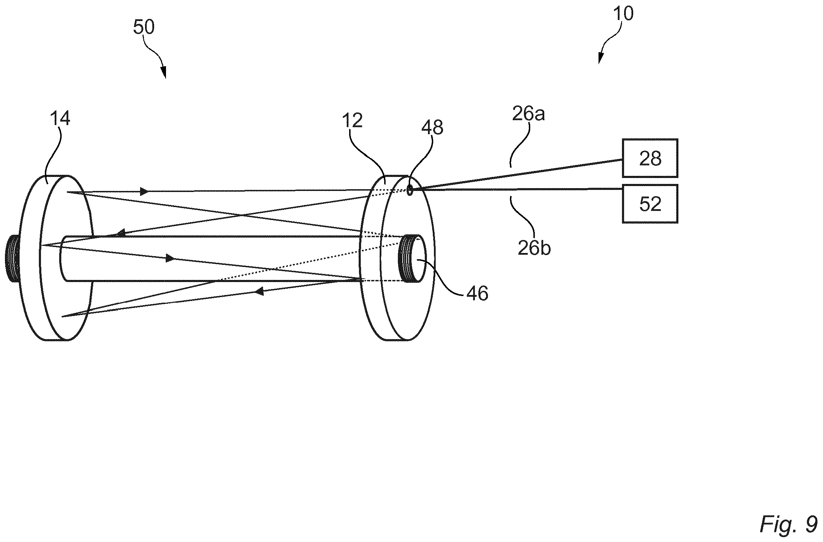

Figur 9 zeigt eine weitere Ausführungsform einer Langwegzelle 10, bei der die Spiegel 12, 14 wie in Figur 9 gezeigt aufgebaut sind. Die Langwegzelle 10 umfasst ein Halteelement 46, an dem die beiden Spiegel 12, 14 zentral befestigt sind. Es ist zu erkennen, dass der Lichtstrahl 26 durch eine Öffnung 48 im Spiegel 12 in die Langwegzelle 10 eintritt und durch die gleiche Öffnung 48 wieder austritt.

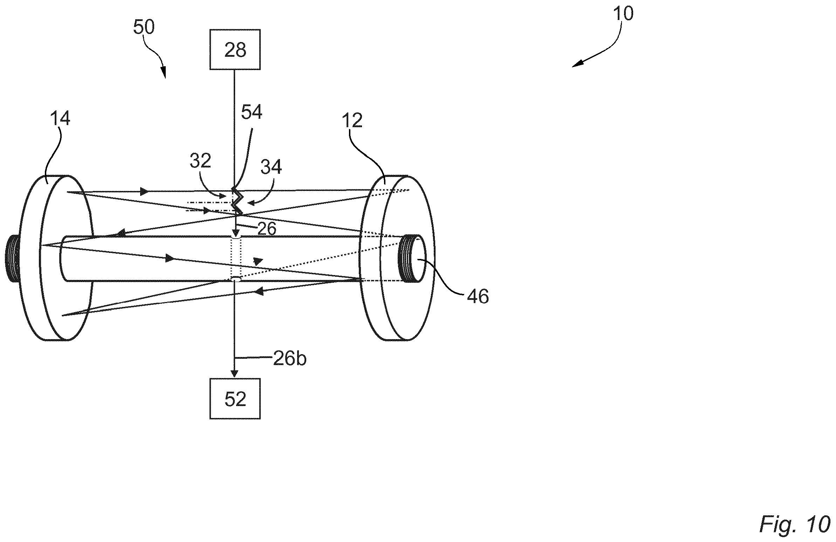

Figur 10 zeigt eine weitere Ausführungsform einer Langwegzelle 10 mit einem Reflexionselement 54, an dem die Reflexionsflächen 32 und 34 ausgebildet sind. Bei den Ausführungsformen gemäß der Figuren 1 und 2 ist das Reflexionselement Teil des Einkoppelelements 20 (vgl. Figur 7).

Der Übersichtlichkeit halber ist in Figur 10 der Strahlweg nach Reflexion an der ersten Reflexionsfläche 32 und der zweiten Reflexionsfläche 34 nur schematisch eingezeichnet.

**Bezugszeichenliste**

| | | | |
|---|---|---|---|
| 10 | Langwegzelle | 56 | Lichtleitfaser |
| 12 | erster Spiegel | 58 | Auskoppelelement |
| 14 | zweiter Spiegel | | |
| 16 | erste Spiegelfläche | 60 | Wechselabschnitt |
| 18 | zweite Spiegelfläche | 62 | Spiegelfläche |
| | | 64 | Öffnung |
| 20 | Einkoppelelement | 66 | Umsetzvorrichtung |
| 22 | Einkoppelfläche | | |
| 24 | Auskoppelfläche | α | Versatzwinkel |
| 26 | Lichtstrahl | β | Öffnungswinkel |
| 26a | einfallender Lichtstrahl | | |
| 26b | ausfallender Lichtstrahl | a | Abstand |
| 28 | Laser | g | Gerade |
| | | L | Längsachse |
| 30 | Auftreffpunkt | r | Abstandskoordinate |
| 32 | erste Reflexionsfläche | R | Krümmungsradius |
| 32.1, | 32.2 Teil-Fläche | R₁₂ | Krümmungsradius |
| 34 | zweite Reflexionsfläche | R₁₄ | Krümmungsradius |
| 36 | dritte Reflexionsfläche | R_{42.1} | Krümmungsradius |
| 38 | vierte Reflexionsfläche | | |
| | | D | Spiegelabstand Ausgangswert |
| 40 | fünfte Reflexionsfläche | | |
| 42 | Erstspiegel-Segment | | |
| 44 | Zweitspiegel-Segment | | |
| 46 | Halteelement | | |
| 48 | Öffnung | | |
| 50 | Spektroskopievorrichtung | | |
| 52 | Lichtstrahl-Analysevorrichtung | | |
| 54 | Reflexionselement | | |

## Patentansprüche

1. Langwegzelle (10), insbesondere Herriott-Zelle, mit
(a) einem ersten Spiegel (12) und
(b) einem zweiten Spiegel (14),
**dadurch gekennzeichnet, dass**
(c) der erste Spiegel (12)
- ein erstes Erstspiegel-Segment (42.1) und
- zumindest ein zweites Erstspiegel-Segment (42.2), das das erste Erstspiegel-Segment (42.1) radial umgibt, aufweist,
- wobei sich die Erstspiegel-Segmente (42) in ihren Krümmungen (R_{42.1}, R_{42.2}) oder Brennweiten unterscheiden,
(d) der zweite Spiegel (14)
- ein erstes Zweitspiegel-Segment (44.1) und
- zumindest ein zweites Zweitspiegel-Segment (44.2), das das erste Zweitspiegel-Segment (44.1) radial umgibt, aufweist,
- wobei sich die Zweitspiegel-Segmente (44) in ihren Krümmungen (R_{44.1}, R_{44.2}) oder Brennweiten unterscheiden,
(e) das erste Erstspiegel-Segment (42.1) und das erste Zweitspiegel-Segment (44.1) so einander zugeordnet sind, dass ein Lichtstrahl zwischen beiden hin-und zurückreflektiert wird und dass
(f) das zweite Erstspiegel-Segment (42.2) und das zweite Zweitspiegel-Segment (44.2) so einander zugeordnet sind, dass ein Lichtstrahl zwischen beiden hin-und zurückreflektiert wird.

2. Langwegzelle (10) nach Anspruch 1, **dadurch gekennzeichnet, dass**
(a) der erste Spiegel (12)
- ein drittes Erstspiegel-Segment (42.3), das das zweite Erstspiegel-Segment (42.2) radial umgibt, aufweist,
- wobei sich das dritte Erstspiegel-Segment (42.3) und das zweite Erstspiegel-Segment (42.2) in ihren Krümmungen (R_{42.3}, R_{42.2}) oder Brennweiten unterscheiden,
(b) der zweite Spiegel (14)
- zumindest ein drittes Zweitspiegel-Segment (44.3), das das zweite Zweitspiegel-Segment (44.2) radial umgibt, aufweist,
- sich das dritte Zweitspiegel-Segment (44.3) und das zweite Zweitspiegel-Segment (44.2) in ihren Krümmungen (R_{44.3}, R_{44.2}) oder Brennweiten unterscheiden, und dass
(c) das dritte Erstspiegel-Segment (42.3) und das dritte Zweitspiegel-Segment (44.3) so einander zugeordnet sind, dass ein Lichtstrahl zwischen beiden hin-und zurückreflektiert wird.

3. Langwegzelle (10) nach einem der vorstehenden Ansprüche, **gekennzeichnet durch** ein Reflexionselement (54), das
- eine Einkoppelfläche (22) zum Einkoppeln eines Lichtstrahls (26) in die Langwegzelle (10) und
- eine Auskoppelfläche (24) zum Auskoppeln des Lichtstrahls (26) aus der Langwegzelle (10) aufweist,
- wobei die Auskoppelfläche (24) unter einem Versatzwinkel (a) von zumindest 30° zur Einkoppelfläche (22) verläuft.

4. Langwegzelle (10) nach Anspruch 3, **dadurch gekennzeichnet, dass** das Reflexionselement (54),
eine erste Reflexionsfläche (32) aufweist, die so angeordnet ist, dass ein von der Einkoppelfläche (22) eingekoppelter Lichtstrahl (26)
- zunächst von zumindest einem Spiegel-Segment (44.3) reflektiert wird, insbesondere mehrfach zwischen Spiegel-Segmenten (42.3, 44.3) hin-und zurückreflektiert wird,
- danach auf die erste Reflexionsfläche (32) trifft und
- im Strahlengang nach der ersten Reflexionsfläche (32) auf ein anderes Spiegel-Segment (42.2) des gleichen Spiegels trifft.

5. Langwegzelle (10) nach den Ansprüchen 2 und 4, **dadurch gekennzeichnet, dass** das Reflexionselement (54)
eine zweite Reflexionsfläche (34) aufweist, die so relativ zur Einkoppelfläche (22) angeordnet ist, dass ein von der Einkoppelfläche (22) eingekoppelter Lichtstrahl (26), der von der ersten Reflexionsfläche (32) auf ein Spiegel-Segment reflektiert wurde, auf ein Spiegel-Segment reflektiert wird, auf das er im vorhergehenden Strahlverlauf noch nicht getroffen ist.

6. Langwegzelle (10) nach einem der Ansprüche 4 oder 5, **dadurch gekennzeichnet, dass**
die erste Reflexionsfläche (32) angeordnet ist zum Reflektieren eines Lichtstrahls (26), der von einem Spiegel-Segment mit einer ersten Krümmung (R_{42.1}) oder ersten Brennweite auf die Reflexionsfläche (32) fällt, auf ein Segment mit einer von der ersten Krümmung (R_{42.1}) verschiedenen zweiten Krümmung (R_{42.2}) oder Brennweite.

7. Langwegzelle (10) nach einem der vorstehenden Ansprüche, **dadurch gekennzeichnet, dass**
- zumindest eines der Erstspiegel-Segmente (42.1) über zumindest 75%, insbesondere zumindest 90%, seiner Fläche plan ist,
- zumindest eines der Zweitspiegel-Segmente (44.1) über zumindest 75%, insbesondere zumindest 90%, seiner Fläche plan ist,
- das plane Erstspiegel-Segment (42.1) von einem gekrümmten Erstspiegel-Segment (42.2) umgeben ist und
- das plane Zweitspiegel-Segment (44.1) von einem gekrümmten Zweitspiegel-Segment (44.2) umgeben ist.

8. Langwegzelle (10) nach einem der vorstehenden Ansprüche, **gekennzeichnet durch** zumindest einen dritten, planen Spiegel, der so angeordnet ist, dass ein Lichtstrahl (26) alle Spiegel trifft, bevor er die Langwegzelle (10) verlässt.

9. Langwegzelle (10) nach einem der vorstehenden Ansprüche, **dadurch gekennzeichnet, dass** die Langwegzelle eine Lichtleitfaser (56) aufweist, die zum Leiten des Lichtstrahls (26) angeordnet ist und die so angeordnet ist, dass der Lichtstrahl (26) in die Langwegzelle (10) einkoppelbar ist.

10. Langwegzelle (10) nach einem der vorstehenden Ansprüche, **gekennzeichnet durch**
- ein Halteelement (46),
- wobei der erste Spiegel (12) und der zweite Spiegel (14) zentral am Haltelement (46) befestigt sind.

## Claims

1. A long-path cell (10), in particular a Herriott cell, having
(a) a first mirror (12) and
(b) a second mirror (14),
**characterized in that**
(c) the first mirror (12)
- has a first first-mirror segment (42.1) and
- at least a second first-mirror segment (42.2) which radially surrounds the first first-mirror segment (42.1),
- wherein the first-mirror segments (42) differ in their curvatures (R_{42.1}, R_{42.2}) or focal distances
(d) the second mirror (14)
- has a first second-mirror segment (44.1) and
- at least a second second-mirror segment (44.2) which radially surrounds the first second-mirror segment (44.1),
- wherein the second-mirror segments (44) differ in their curvatures (R_{44.1}, R_{44.2}) or focal distances,
(e) the first first-mirror segment (42.1) and the first second-mirror segment (44.1) are assigned to each other such that a light beam is reflected back and forth between them and that
(f) the second first-mirror segment (42.2) and the second second-mirror segment (44.2) are assigned to each other such that a light beam is reflected back and forth between them.

2. The long-path cell (10) according to Claim 1, **characterized in that**
(a) the first mirror (12)
- has a third first-mirror segment (42.3) which radially surrounds the second first-mirror segment (42.2),
- wherein the third first-mirror segment (42.3) and the second first-mirror segment (42.2) differ in their curvatures (R_{42.3}, R_{42.2}) or focal distances,
(b) the second mirror (14)
- has at least a third second-mirror segment (44.3) which radially surrounds the second second-mirror segment (44.2),
- the third second-mirror segment (44.3) and the second second-mirror segment (44.2) differ in their curvatures (R_{44.3}, R_{44.2}) or focal distances, and that
(c) the third first-mirror segment (42.3) and the third second-mirror segment (44.3) are assigned to each other such that a light beam is reflected back and forth between them.

3. The long-path cell (10) according to any one of the preceding claims, **characterized by** a reflection element (54) having
- a coupling surface (22) for coupling a light beam (26) into the long-path cell (10) and
- a decoupling surface (24) for decoupling the light beam (26) from the long-path cell (10),
- wherein the decoupling surface (24) extends at an offset angle (a) of at least 30° to the coupling surface (22).

4. The long-path cell (10) according to Claim 3, **characterized in that** the reflection element (54)
has a first reflection surface (32) which is disposed such that a light beam (26) coupled into the coupling surface (22)
- is first reflected by at least one mirror segment (44.3), in particular reflected multiple times back and forth between mirror segments (42.3, 44.3),
- then hits the first reflection surface (32) and
- hits a different mirror segment (42.2) of the same mirror in the beam path after the first reflection surface (32).

5. The long-path cell (10) according to Claims 2 and 4, **characterized in that** the reflection element (54)
has a second reflection surface (34) which is disposed in relation to the coupling surface (22) such that a light beam (26) coupled into the coupling surface (22) which had been reflected onto a mirror segment by the first reflection surface (32) is reflected onto a mirror segment which it had not hit on the previous beam path.

6. The long-path cell (10) according to Claims 4 and 5, **characterized in that** the first reflection surface (32) is disposed to reflect a laser beam (26) which hits the reflection surface (32) from a mirror segment with a first curvature (R_{42.1}) or first focal distance onto a segment with a second curvature (R_{42.2}) differing from the first curvature (R_{42.1}) or focal distance.

7. The long-path cell (10) according to any one of the preceding claims, **characterized in that**
- at least one of the first-mirror segments (42.1) is flat over at least 75%, in particular at least 90%, of its surface,
- at least one of the second-mirror segments (44.1) is flat over at least 75%, in particular at least 90%, of its surface,
- the flat first-mirror segment (42.1) is surrounded by a curved first-mirror segment (42.2) and
- the flat second-mirror segment (44.1) is surrounded by a curved second-mirror segment (44.2)

8. The long-path cell (10) according to any one of the preceding claims, **characterized by** at least one third, flat mirror which is disposed such that a light beam (26) hits all of the mirrors before exiting the long-path cell (10).

9. The long-path cell (10) according to any one of the preceding claims, **characterized in that** the long-path cell has an optical fiber (56) which is disposed to guide the light beam (26) and which is disposed such that the light beam (26) is couplable into the long-path cell (10).

10. The long-path cell (10) according to any one of the preceding claims, **characterized by**
- a holding element (46),
- wherein the first mirror (12) and the second mirror (14) are attached centrally on the holding element (46).

## Revendications

1. Cellule à long parcours (10), en particulier cellule de Herriott, ayant
(a) un premier miroir (12) et
(b) un second miroir (14),
**caractérisée en ce que**
(c) le premier miroir (12) présente
- un premier segment (42.1) de premier miroir et
- au moins un deuxième segment (42.2) de premier miroir qui entoure radialement le premier segment (42.1) de premier miroir,
- dans laquelle les segments (42) de premier miroir se distinguent par leurs courbures (R_{42.1}, R_{42.2}) ou leurs distances focales,
(d) le second miroir (14)
- présente un premier segment (44.1) de second miroir et
- au moins un deuxième segment (44.2) de second miroir qui entoure radialement le premier segment (44.1) de second miroir,
- dans laquelle les segments (44) de second miroir se distinguent par leurs courbures (R_{42.1}, R_{42.2}) ou leurs distances focales,
(e) le premier segment (42.1) de premier miroir et le premier segment (44.1) de second miroir sont associés l'un à l'autre de telle sorte qu'un faisceau lumineux est réfléchi en va-et-vient entre les deux miroirs et **en ce que**
(f) le deuxième segment (42.2) de premier miroir et le deuxième segment (44.2) de second miroir sont associés l'un à l'autre de telle sorte qu'un faisceau lumineux est réfléchi en va-et-vient entre les deux miroirs.

2. Cellule à long parcours (10) selon la revendication 1, **caractérisée en ce que**
(a) le premier miroir (12) présente
- un troisième segment (42.3) de premier miroir qui entoure radialement le deuxième segment (42.2) de premier miroir,
- dans laquelle le troisième segment (42.4) de premier miroir et le deuxième segment (42.2) de premier miroir se distinguent par leurs courbures (R_{42.3}, R_{42.2}) ou leurs distances focales,
(b) le second miroir(14)
- présente au moins un troisième segment (44.3) de second miroir qui entoure radialement le deuxième segment (44.2) de second miroir,
- le troisième segment (44.3) de second miroir et le deuxième segment (44.2) de second miroir se distinguent par leurs courbures (R_{44.3}, R_{44.2}) ou leurs distances focales, et **en ce que**
(c) le troisième segment (42.3) de premier miroir et le troisième segment (44.3) de second miroir sont associés l'un à l'autre de telle sorte qu'un faisceau lumineux est réfléchi en va-et-vient entre les deux miroirs.

3. Cellule à long parcours (10) selon l'une quelconque des revendications précédentes, **caractérisée par** un élément de réflexion (54), qui présente
- une surface de couplage (22) pour le couplage d'un faisceau lumineux (26) dans la cellule à long parcours (10) et
- une surface de découplage (24) pour le découplage du faisceau lumineux (26) en dehors de la cellule à long parcours (10),
- dans laquelle la surface de découplage (24) s'étend selon un angle de décalage (a) d'au moins 30° par rapport à la surface de couplage (22).

4. Cellule à long parcours (10) selon la revendication 3, **caractérisée en ce que** l'élément de réflexion (54)
présente une première surface de réflexion (32) qui est disposée de telle sorte qu'un faisceau lumineux (26) couplé par la surface de couplage (22)
- est d'abord réfléchi par au moins un segment de miroir (44.3), en particulier est réfléchi en va-et-vient plusieurs fois entre des segments de miroir (42.3, 44.3),
- puis rencontre la première surface de réflexion (32) et
- dans le trajet du faisceau après la première surface de réflexion (32) rencontre un autre segment de miroir (42.2) du même miroir.

5. Cellule à long parcours (10) selon les revendications 2 et 4, **caractérisée en ce que** l'élément de réflexion (54)
présente une seconde surface de réflexion (34) qui est disposée par rapport à la surface de couplage (22) de telle sorte qu'un faisceau lumineux (26), qui est couplé par la surface de couplage (22) et a été réfléchi par la première surface de réflexion (32) sur un segment de miroir, est réfléchi sur un segment de miroir qu'il n'a pas encore rencontré dans le précédent tracé du faisceau.

6. Cellule à long parcours (10) selon une des revendications 4 ou 5, **caractérisée en ce que**
la première surface de réflexion (32) est disposée pour réfléchir un faisceau lumineux (26), qui tombe par un segment de miroir sur la surface de réflexion (32) avec une première courbure (R_{42.1}) ou une première distance focale, sur un segment avec une seconde courbure (R_{42.2}) ou une distance focale différente de la première courbure (R_{42.1}).

7. Cellule à long parcours (10) selon l'une quelconque des revendications précédentes, **caractérisée en ce que**
- au moins un des segments (42.1) de premier miroir est plan sur au moins 75 %, en particulier au moins 90 %, de sa surface,
- au moins un des segments (44.1) de second miroir est plan sur au moins 75 %, en particulier au moins 90 %, de sa surface,
- le segment plan de premier miroir (42.1) est entouré d'un segment courbé (42.2) de premier miroir et
- le segment plan de second miroir (44.1) est entouré d'un segment courbé (44.2) de second miroir.

8. Cellule à long parcours (10) selon l'une quelconque des revendications précédentes, **caractérisée par** au moins un troisième miroir plan, qui est disposé de telle sorte qu'un faisceau lumineux (26) rencontre tous les miroirs avant de quitter la cellule à long parcours (10).

9. Cellule à long parcours (10) selon l'une quelconque des revendications précédentes, **caractérisée en ce que** la cellule à long parcours présente une fibre optique (56) qui est disposée pour diriger le faisceau lumineux (26) et disposée de telle sorte que le faisceau lumineux (26) peut être couplé dans la cellule à long parcours (10).

10. Cellule à long parcours (10) selon l'une quelconque des revendications précédentes, **caractérisée par**
- un élément de retenue (46),
- dans laquelle le premier miroir (12) et le second miroir (14) sont fixés centralement sur l'élément de retenue (46).
